(19) **Europäisches Patentamt**

**European Patent Office**

**Office européen des brevets**

(11) Numéro de publication: **0 291 386 B1**

(12) **FASCICULE DE BREVET EUROPEEN**

(45) Date de publication de fascicule du brevet: **30.09.92**  (51) Int. Cl.⁵: **F02M 51/08**, F02M 61/08

(21) Numéro de dépôt: **88401068.7**

(22) Date de dépôt: **03.05.88**

(54) **Injecteur pour moteur à allumage commandé et injection directe.**

(30) Priorité: **12.05.87 FR 8706632**

(43) Date de publication de la demande:
**17.11.88 Bulletin 88/46**

(45) Mention de la délivrance du brevet:
**30.09.92 Bulletin 92/40**

(84) Etats contractants désignés:
**AT DE ES GB IT SE**

(56) Documents cités:
**DE-A- 1 451 955       DE-A- 3 427 526**
**DE-C- 712 425         FR-A- 2 578 295**
**GB-A- 2 155 693       US-A- 2 749 181**
**US-A- 3 450 353**

(73) Titulaire: **REGIE NATIONALE DES USINES RE-
NAULT**
**Boîte postale 103 8-10 avenue Emile Zola**
**F-92109 Boulogne-Billancourt(FR)**

(72) Inventeur: **Hauet, Bertrand**
**67, boulevard Galliéni**
**F-92130 Issy les Moulineaux(FR)**
Inventeur: **Ozenfant, Christian**
**41, rue du Stade**
**F-78340 Les Clayes sous Bois(FR)**
Inventeur: **Jourde, Jean-Pierre**
**25, avenue Emile Ogier**
**F-78290 Croissy sur Seine(FR)**
Inventeur: **Dabert, Claude**
**Lotissement Le Village**
**F-38200 Vilette de Vienne(FR)**

Rank Xerox (UK) Business Services

## Description

L'injection directe sur les moteurs à allumage commandé entraîne automatiquement le procédé de combustion à charge stratifiée qui présente une alternative aux procédés de combustion dits "à mélange pauvre" avec préparation du mélange en amont de la ou des soupapes d'admission.

Les chambres de combustion des moteurs à charge stratifiée sont de deux types : chambre secondaire et chambre ouverte. De très nombreux travaux ont été conduits par des constructeurs du monde entier, les plus célèbres pour les moteurs dits à chambre ouverte étant peut-être ceux des procédés PROCO développés par FORD.

Afin de pouvoir donner les conditions pour une combustion correcte dans le procédé de stratification en chambre ouverte, celle-ci étant dans le piston pour un moteur à 4 temps ou dans la culasse pour un moteur 2 temps, le système d'injection et principalement l'injecteur doivent avoir trois qualités essentielles :
- assurer une excellente pulvérisation du combustible,
- autoriser une pénétration du jet de combustible dans la chambre adaptée aux conditions de charge et de vitesse du moteur,
- être capables de délivrer de très petites quantités de combustibles de façon stable et répétitive.

Il est connu depuis très longtemps que l'utilisation de phénomènes soniques donne une excellente pulvérisation de mélanges air ou gaz et combustible, la pression de gaz étant référencée soit par rapport à la pression tubulure (dépression), soit par rapport à la pression du cylindre au moment de l'injection dans un rapport voisin de 2. Plus récemment et dans le cas de développement de système d'injection pour moteur 2 temps, la Société ORBITAL (Australie) a développé un tel système revendiquant une telle pulvérisation.

L'objet de la présente invention est un injecteur électromagnétque de type pression-temps ayant des caractéristiques de dynamique autorisant de très faible quantités injectées de façon stable et répétitive donnant lieu à une excellente pulvérisation sans artifice extérieur tel que l'emploi d'air comprimé, et dont la pénétration du jet est modulable par le réglage de la pression de combustible. Cet injecteur est, par ailleurs, de type à clapet, ne posant aucun problème vis-à-vis de la pression de combustion lorsqu'il est installé directement dans la chambre de combustion d'un moteur.

Son agencement interne est, par ailleurs, spécialement étudié pour que son prix de revient ne soit pas très élevé.

L'injecteur est de type pression-temps, c'est-à-dire que la quantité de combustible injectée est uniquement fonction de la section de passage du combustible, de la pression de combustible en amont de cette section au moment de l'injection et du temps d'ouverture de ladite section.

L'injecteur selon l'invention comporte une bobine d'électro-aimant torique de type massif axisymétrique, logée dans un support de circuit magnétique monté dans cet alésage, ainsi qu'un équipage mobile constitué d'une palette plane solidaire d'une fourrure, un clapet qui est solidaire de cette aiguille étant maintenu sur un siège dans la position de fermeture par un ressort de rappel agissant sur l'aiguille au moyen d'une coupelle.

Selon l'invention l'injecteur a pour caractéristique que l'aiguille avec le clapet forme un dispositif clapet inversé qui s'ouvre dans le sens de l'injection, et la coupelle est disposée mobile sur ladite aiguille, et en ce que l'aiguille est libérée de la force du ressort par le déplacement de l'équipage mobile qui pousse contre la coupelle suite à l'excitation de la bobine d'électro-aimant et l'aiguille ne s'ouvre que sous l'action des forces dues à la pression de combustible sur son clapet.

Selon une autre caractéristique l'aiguille est attelée par une tête à une rondelle montée en appui sur la coupelle, cette rondelle étant maintenue en appui contre la fourrure par le ressort de rappel.

Selon une autre caractéristique, la tête de cette aiguille constitue un point d'attelage de celle-ci éloigné de son siège et propre à l'élimination des portées de guidage.

La course de l'équipage mobile, et par suite celle d'ouverture au clapet, est telle qu'avec une forme connue et appropriée des sièges du clapet, le combustible est pulvérisé très finement sous forme d'une nappe conique de carburant. L'équipage mobile est en parfait équilibre hydrostatique dans le combustible sous pression régnant dans le corps de l'injecteur, la pression de combustible étant réalisée par une pompe à engrenages, par exemple, entraînée par un moteur électrique à courant continu, seules les forces développées par l'électro-aimant et par des ressorts assurent les équilibres des pièces mobiles de l'injecteur. Comme signalé précédemment, la pénétration du jet conique peut donc être modulée par la pression du combustible qui peut varier par exemple en jouant sur la tension de commande du moteur électrique de la pompe à engrenages ou à l'aide d'un régulateur de pression assisté électroniquement.

Les mouvements désolidarisés de l'équipage électromagnétique et de l'aiguille obturateur à l'ouverture permettent d'obtenir une ouverture plus lente que la fermeture, conception garante de réponse, autorisant de très faibles débits de façon stable et répétitive avec une réponse linéaire dans l'espace temps d'injection-quantité injectée par coup.

De plus, cette désolidarisation relaxe les tolérances de fabrication quant au centrage des différentes pièces.

D'autres particularités et avantages de l'invention ressortiront plus clairement à la lecture de la description qui suit d'un mode de réalisation préféré, donné à titre d'exemple non limitatif, en référence aux dessins annexés dans lesquels :

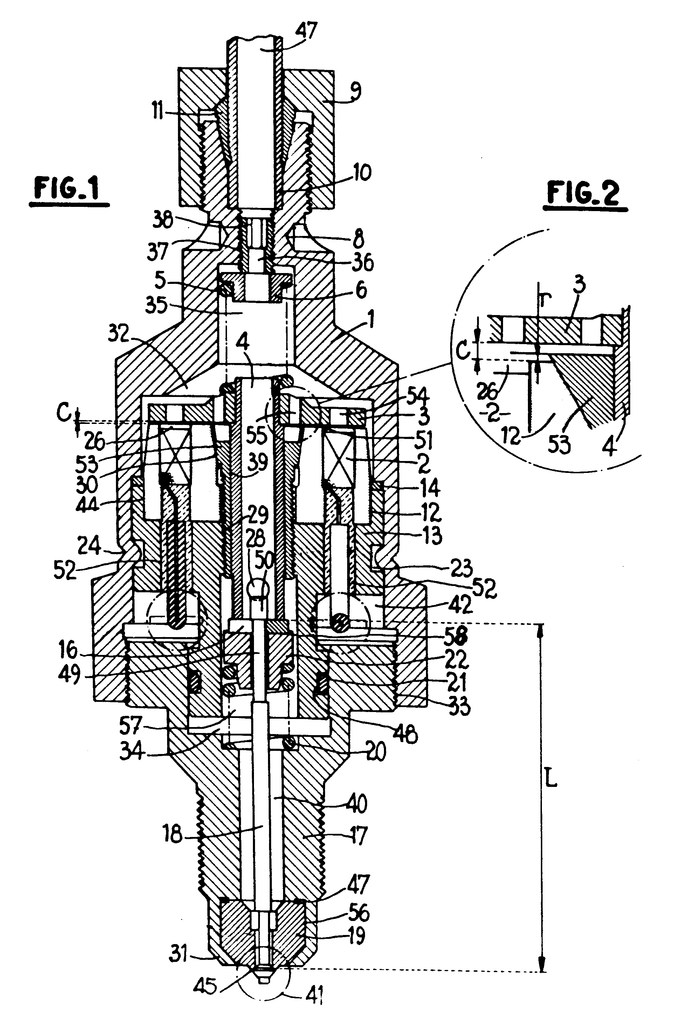

- la figure 1 représente une vue en coupe longitudinale et axiale de cet injecteur,
- et la figure 2 représente une vue de détail d'une palette illustrée à la figure 1.

Conformément à ces figures, un tel injecteur comprend un corps 1 comprenant de haut en bas :
- une tête spécialement agencée pour la fixation du tube d'arrivée 10 du combustible sous pression venant d'une pompe non représentée ici. Il s'agit de raccords et olives classiques 9 et 11 bien connus,
- un rétrécissement taraudé 37 dont le rôle sera expliqué plus loin,
- des alésages de diamètres croissants 35, 32 et 42,
- le bas du corps étant taraudé 33 pour recevoir un support 17 appelé support d'aiguille d'injecteur.

Dans l'alésage 42 du corps 1 est monté un support de circuit magnétique 13 constitué de la façon suivante : le support 13 comprend en sa partie supérieure un alésage 44 dans lequel est emmanché-collé le circuit magnétique proprement dit 12 qui est massif axisymétrique, ledit circuit magnétique comportant une gorge torique 51 dans laquelle est collée une bobine torique 2 de fils, le support 13 comprenant deux perçages 52 autorisant la sortie des fils de la bobine 2 avec des moyens appropriés d'isolation électrique. Le support 13 comporte de plus sur son diamètre extérieur une gorge 23 qui est utilisée comme gorge de sertissage 24 du corps 1 sur le support 13, le support 13 au moment du sertissage est maintenu en appui avec l'intermédiaire d'un joint d'étanchéité 14 au fond du dégagement 42 de l'intérieur du corps 1. Le corps 13 de plus petit diamètre à sa partie inférieure comporte une gorge 48 dans laquelle est monté un joint torique 21.

Par ailleurs, dans la partie supérieure taraudée de l'alésage central 29 du corps 13 est montée, vissée, une douille 53 dont la partie extérieure conique 30 située en sa partie haute vient en appui sur la partie conique correspondante du circuit magnétique 12 ; la matière de cette douille 53 est de préférence magnétique et en acier trempé. Dans l'alésage 39 de ladite douille 53 peut coulisser de façon parfaitement guidée, une fourrure 4 à laquelle est fixée en sa partie supérieure une palette 3 circulaire qui représente, avec la fourrure 4, la partie mobile de l'électro-aimant. L'ensemble de la palette 3 et de l'électro-aimant 12 est agencé d'un vide annulaire 26 et de perçages 54 et 55 de façon à provoquer des amortissements hydrauliques identiques à ceux de l'équipage mobile de l'électro-aimant décrit dans le brevet français 2 543 647.

La partie inférieure du corps 1 qui comporte l'alésage 42 comporte une partie taraudée 33 dans laquelle vient se monter le support 17 de l'aiguille d'injecteur 18. Le support 17, dont la forme extérieure à agencer de façon à pouvoir fixer l'ensemble de l'injecteur sur la culasse du moteur, comprend dans sa partie supérieure un grand alésage 34 qui viendra épouser au montage le bas du support 13 de l'électro-aimant précédent.

Par ailleurs, le support 17 est percé d'un alésage 40 et comprend, à sa partie inférieure, un alésage 56 de plus grand diamètre que l'alésage 40. Dans cet alésage 56 vient prendre place un siège d'aiguille 19 qui est monté dans ledit alésage par sertissage de l'extrémité 31 du corps 17, l'étanchéité entre le siège d'aiguille 19 et le support 17 étant réalisée à l'aide d'un joint métallique 47.

Le siège d'aiguille 19 comportant un siège proprement dit 45 qui forme avec la partie inférieure de l'aiguille 18 un clapet dit inversé 41 de géométrie classique. La partie supérieure de l'aiguille 18 comprend une partie décolletée 49 située en dessous d'une tête 50, la différence des diamètres des parties 50 et 49 permettant le passage de la partie fendue d'une rondelle 16. Ladite rondelle 16 est montée en appui sur une coupelle 22 dont la partie supérieure comprend un centrage 58 épousant le diamètre extérieur de la rondelle 16. A la partie inférieure de la coupelle 22 un centrage reçoit un ressort 20 dont la partie inférieure est en appui au fond d'un dégagement de centrage situé en bas de l'alésage 34 du support 17. Par l'action dudit ressort 20, de la coupelle 22, de la rondelle fendue 16 et de la tête d'aiguille 50, l'aiguille 18 est maintenue en appui sur le siège 45.

Par ailleurs, la partie inférieure de la fourrure 4 est en appui sur la rondelle 16, l'enfoncement du support d'aiguille 18 dans le corps 1 par l'intermédiaire du filetage 33 étant réglé pour obtenir un entrefer c entre la palette 3 et le haut de l'électro-aimant 12. Cet entrefer c diminué de l'espace r correspondant au dépassement de la tête de la douille 53 par rapport à la face supérieure de l'électro-aimant 12 représente la course de l'aiguille d'injecteur 18 par rapport à son siège 45.

Le haut de la palette 3 et de la fourrure 4 sont, par ailleurs, agencés pour recevoir un ressort 5 dont la partie supérieure reçoit une rondelle 6 elle-même en appui sur une vis 36 qui peut-être réglée en course dans un filetage 37 situé à la partie supérieure du corps 1. Ladite vis 36 est percée d'un alésage 38 permettant le passage du combustible et le réglage de ladite vis par un moyen approprié. Le haut du corps 1 comprend de plus deux amorces de perçage 8 situées au niveau du filetage 37 autorisant par déformation permanente des fonds des perçages 8 un blocage de la vis 37.

Mais la description du fonctionnement de l'injecteur permettra d'éclairer le rôle des pièces précédentes.

Au repos, c'est-à-dire sans excitation électrique de l'électroaimant, le combustible sous pression qui pénètre dans le corps de l'injecteur 1 par le tube 47 parvient jusqu'au siège de l'aiguille 45 par l'intermédiaire des perçages 38 et 35, celui de la fourrure 4 percée de deux alésages 28, 57 et 40. Du fait des tarages respectifs des deux ressorts antagonistes 20 et 5, l'aiguille 18 est plaquée sur son siège avec une force supérieure à celle due à la pression de combustible sur ladite aiguille. Les forces respectives de deux ressorts étant respectivement de l'ordre de 100 N pour le ressort 20 et de 20 N pour le ressort 5, la force d'appui de l'aiguille sur son siège est capable sans aucun problème d'étancher une pression de combustible supérieure à 8 MPa (80 bars).

Dans cette position de repos, les seuls efforts qui s'exercent sur l'équipage mobile, constitué de la fourrure 4 et de la palette 3, sont les efforts conjugués des deux ressorts 5 et 20, puisque l'ensemble de l'équipage mobile est sur toutes ses faces actives en contact avec le liquide donc en complet équilibre hydrostatique. Lorsque l'on excite le bobinage 2 de l'électro-aimant, et lorsque la force développée par celui-ci surpasse les forces des ressorts antagonistes, la palette est appelée vers l'électro-aimant. A cet instant, l'action de la partie inférieure de la fourrure 4 sur le haut de la rondelle 16 libère l'aiguille 18 de l'injecteur qui ne s'ouvre elle-même que sous l'action des forces dues à la pression de combustible sur la section de l'aiguille à son siège 45. Lorsque l'électro-aimant reste sous tension, la palette 3 a parcouru sa course c-r et reste donc en appui sur la tête de la douille 53, de manière identique, le dessus de la rondelle fendue 16 s'est déplacée de c-r et la tête 50 de l'aiguille 18 vient s'appuyer sur la partie supérieure de la rondelle 16, la course de l'aiguille 18 correspond donc bien ainsi à c-r. Lorsque l'alimentation de la bobine de l'électro-aimant est arrêtée, les forces électromagnétiques s'exerçant sur la palette 3 disparaissent et sous l'effet des efforts différentiels dus aux ressorts 20 et 5, la rondelle fendue 16 revient en position de repos entraînant très rapidement l'aiguille 18 sur son siège 45 par l'intermédiaire de sa tête 50 et repousse la palette 3 par l'intermédiaire de la fourrure 4 à sa position initiale.

Il est très important de noter la particularité des forces s'exerçant sur l'aiguille 18 durant ses mouvements, son ouverture est assurée par des efforts hydrauliques qui restent relativement faibles. Par exemple, dans un cas de réalisation préférée, le siège 45 a un diamètre de 2,2 mm, c'est-à-dire que les forces hydrauliques s'exerçant sur l'aiguille sont de 3,8 N avec une pression de combustible de 10 bars et 30,4 N avec 80 bars, par contre les forces de rappel de ladite aiguille sont uniquement dues aux ressorts et sont de l'ordre, selon ce qui précède, de 80 N, l'électro-aimant développant au collage une force de l'ordre de 200 N. On voit donc, à l'aide de ces valeurs chiffrées, que dans tous les cas les efforts à l'ouverture de l'aiguille sont inférieurs à ceux qui la ferment, ce qui correspond à la caractéristique d'un mobile plus lent à l'ouverture qu'à la fermeture et donc donnant lieu à une réponse parfaitement linéaire, même pour les faibles débits. Une autre particularité de l'injecteur est le mode de suspension de l'aiguille 18 ; en effet, on peut se rendre compte à l'aide des descriptions précédentes et de la figure, qu'elle n'est absolument pas guidée, par contre elle a une longueur L relativement importante, sa fixation étant située dans la partie la plus éloignée de son siège, cette conception évite ainsi un guidage de l'aiguille qui retombe toujours très bien sur son siège puisqu'elle est tirée en un point éloigné de celui-ci. Il est évident que le mode de réalisation précédemment décrit n'est pas limitatif et qu'avec une autre conception de la rondelle 16 le ressort de compression 20 peut être remplacé par un ressort de traction qui, dans ce cas, serait fixé par un moyen approprié en haut du corps 1, cette variante offrant par ailleurs des facilités de réglage dudit ressort de traction, dont le rôle sera identique à celui du ressort 20.

**Revendications**

1. Injecteur électromagnétique pour moteur à allumage commandé et injection directe, du type pression-temps et comprenant un corps (1) constitué par une tête agencée pour la fixation d'un tube (10) d'arrivée de combustible sous pression, un rétrécissement taraudé (37), des alésages de diamètres croissants (35, 32, 42) et une partie inférieure taraudée (33) pour la réception d'un support (17) d'aiguille d'injecteur (18), comportant une bobine d'électro-aimant torique (2, 12) de type massif axisymétrique, logée dans un support (13) de circuit magnétique monté dans cet alésage (42), ainsi qu'un équipage mobile constitué d'une palette plane (3) solidaire d'une fourrure (4), un clapet (41) qui est solidaire de cette aiguille étant maintenu sur un siège (45) dans la position de fermeture par un ressort de rappel (20) agissant sur l'aiguille au moyen d'une coupelle (22), caractérisé en ce que l'aiguille (18) avec le clapet (41) forme un dispositif clapet inversé (41) qui s'ouvre dans le sens de l'injection, et la coupelle (22) est disposée mobile sur ladite aiguille (18), et en ce que l'aiguille (18) est libérée de la force du ressort (20) par le déplacement de l'équipage mobile qui pousse contre la coupelle (22) suite à l'excitation de la bobine d'électro-aimant (2, 12) et l'aiguille (18) ne s'ouvre que sous l'action des forces dues à la pression de combustible sur son clapet (45).

2. Injecteur selon la revendication 1 caractérisé en ce que l'aiguille (18) est attelée par une tête (50) à une rondelle (16) montée en appui sur la coupelle (22), cette rondelle (16) étant maintenue en appui contre la fourrure (4) par le ressort de rappel (20).

3. Injecteur selon la revendication 2 caractérisé en ce que la tête (50) de cette aiguille (18) constitue un point d'attelage de celle-ci éloigné de son siège et propre à l'élimination des portées de guidage.

## Claims

1. An electromagnetic injector for a controlled-ignition and direct-injection engine of the pressure-time type comprising a body (1) formed by a head arranged for the fastening of a tube (10) for intake of pressurized fuel, a tapped constriction (37), bores of increasing diameter (35, 32, 42) and a lower tapped portion (33) adapted to receive a support (17) for an injector needle (18), comprising a toric electromagnet coil (2, 12) of the solid asymmetrical type, housed in a magnetic circuit support (13) housed in this bore (42), and a moving system formed by a plane blade (3) rigid with a bushing (4), a valve (41) which is rigid with this needle being maintained on a seat (45) in the closed position by a return spring (20) acting on the needle by means of a collar (22), characterized in that the needle (18) forms, with the valve (41), an inverted valve device (41) which opens in the direction of injection and in that the collar (22) is disposed to move on this needle (18) and in that the needle (18) is released from the force of the spring (20) by the displacement of the moving system which pushes against the collar (22) following the excitation of the electromagnet coil (2, 12) and the needle (18) opens only under the action of the forces due to the fuel pressure on its valve (45).

2. An injector as claimed in claim 1, characterized in that the needle (18) is coupled by a head (50) to a washer (16) mounted to bear on the collar (22), this washer (16) being held against the bushing (4) by the return spring (20).

3. An injector as claimed in claim 2, characterized in that the head (50) of the needle (18) forms a coupling point therefor remote from its seat and allowing the elimination of guide bearings.

## Patentansprüche

1. Elektromagnetisches Einspritzventil für einen Motor mit gesteuerter Zündung und direkter Einspritzung vom Typ Druck - Zeit, mit einem Körper (1), bestehend aus einem Kopfteil zur Befestigung eines Zufuhrrohrs (10) für unter Druck stehenden Brennstoff, einer mit einem Gewinde versehenen Engstelle (37), Bohrungen mit zunehmenden Durchmessern (35, 32, 42) und einem unteren, mit einem Gewinde versehenen Abschnitt (33) zur Aufnahme einer Halterung (17) für die Einspritzdüsennadel(18), mit einer torischen elektromagnetischen Spule (2, 12) vom massiven axialsymmetrischen Typ, die in einer Halterung (13) für den magnetischen Kreis sitzt, der in der Bohrung 42 vorgesehen ist, sowie mit einem beweglichen Teil, das aus einer ebenen Platte (3) besteht, die fest mit einer Buchse 4 verbunden ist, wobei ein Ventil (41), das fest mit der Nadel verbunden ist, in einem Sitz (45) in Schließstellung mittels einer Rückholfeder (20) gehalten wird, die über einen Teller (22) auf die Nadel wirkt, dadurch gekennzeichnet, daß die Nadel (18) mit dem Ventil (41) eine sich in Einspritzrichtung öffnende umgekehrte Ventilanordnung (41) bildet, daß der Teller (22) beweglich auf der Nadel (18) gelagert ist und daß die Nadel (18) freigegeben wird von der Kraft der Feder (20), durch Verschieben des beweglichen Teils, das den Teller (22) beaufschlagt, als Folge der Erregung der elektromagnetischen Spule (2, 12), wobei sich die Nadel (18) nur unter der Wirkung von Kräften öffnet, die vom Druck des Kraftstoffs auf das Ventil (45) herrühren.

2. Einspritzventil nach Anspruch 1, dadurch gekennzeichnet, daß die Nadel (18) über ein Kopfteil (50) mit einer Haltescheibe (16) gekuppelt ist, die sich auf dem Teller (22) abstützt, wobei sich die Haltescheibe (16) über die Rückholfeder (20) auf der Buchse (4) abstützt.

3. Einspritzventil nach Anspruch 2, dadurch gekennzeichnet, daß das Kopfteil (50) der Nadel (18) ein Ankuppelteil für diese bildet, das im Abstand von ihrem Sitz angeordnet ist und geeignet zur Vermeidung von Führungsflächen ist.

# FIG.1

# FIG.2